# EUROPÄISCHE PATENTSCHRIFT

(11) **EP 0 991 969 B1**
(45) Veröffentlichungstag und Bekanntmachung des Hinweises auf die Patenterteilung: **01.08.2001**
(21) Anmeldenummer: 98934833.9
(22) Anmeldetag: 29.05.1998
(51) Int. Cl.: G02B 6/38

(54) **FERRULENCONTAINER UND VERBINDUNGSANORDNUNG FÜR EINE OPTISCHE MEHRFACHFASER**
FERRULE CONTAINER AND ASSEMBLY DEVICE FOR MULTIPLE OPTICAL FIBERS
CONTENANT A FERRULES ET DISPOSITIF SERVANT A ASSEMBLER DES FIBRES OPTIQUES MULTIPLES

(30) Priorität: 24.06.1997 DE 19726854
(43) Veröffentlichungstag der Anmeldung: 12.04.2000
(73) Patentinhaber: Tyco Electronics Logistics AG, 9323 Steinach / SG (CH)
(72) Erfinder: BLECK, Oliver, D-67361 Freisbach (DE); SCHMIDT, Helge, D-67346 Speyer (DE)
(74) Vertreter: Klunker . Schmitt-Nilson . Hirsch
(86) Internationale Anmeldenummer: DE9801479
(87) Internationale Veröffentlichungsnummer: WO9859271

(56) Entgegenhaltungen:
- EP-A- 0 696 748
- EP-A- 0 718 652
- EP-A- 0 807 837
- WO-A-86/02740
- WO-A-97/34176
- US-A- 5 689 598
- MELCHIOR L ET AL: "A HIGH DENSITY OPTICAL BACKPLANE CONNECTOR" 1996 PROCEEDINGS OF THE 46TH. ELECTRONIC COMPONENTS AND TECHNOLOGY CONFERENCE, ORLANDO, MAY 28 - 31, 1996, Nr. CONF. 46, 28. Mai 1996, Seiten 453-455, XP000684918 INSTITUTE OF ELECTRICAL AND ELECTRONICS ENGINEERS
- MASSAKI TAKAYA ET AL: "DESIGN AND PERFORMANCE OF A MULTIFIBER BACKPANEL TYPE CONNECTOR" IEEE PHOTONICS TECHNOLOGY LETTERS, Bd. 8, Nr. 5, 1. Mai 1996, Seiten 655-657, XP000589265

## Beschreibung

Die Erfindung betrifft einen Ferrulencontainer zur Aufnahme einer in einer Ferrule angeordneten optischen Mehrfachfaser.
Die Erfindung betrifft weiterhin eine Verbindungsanordnung zum Verbinden von optischen Mehrfachfasern.

In der modernen Daten- und Telekommunikation werden zunehmend steigende Datenraten und Übertragungsbandbreiten realisiert.
Hierbei sind heute schon die Grenzen der Leistungsfähigkeit rein elektronischer Systeme erreicht worden. Um die in Zukunft benötigten Datenraten bewältigen zu können, wird vermehrt mit optischen Übertragungssystemen gearbeitet.
Bisher waren für diese Systeme Einzelfaserverbindungen der vorherrschende Lösungsansatz, da die verwendeten Laser bisher nur als Einzelkomponenten hergestellt werden konnten. Mit modernen Lasern können kostengünstig sogenannte Laser-Arrays hergestellt und getestet werden, so daß eine zunehmende Verlagerung der optischen Übertragungssysteme von einer seriellen Übertragung auf eine parallele Übertragung erfolgt.

Bei den bestehenden Ferrulencontainern und Verbindungsanordnungen zum Verbinden von optischen Mehrfachfasern ist von Nachteil, daß mit diesen nur eine geringe Packungsdichte erreicht werden kann (siehe z.B. EP 0 696 748A, EP 0 718 652A, WO 86/02740). Darüber hinaus können in die bestehenden Verbindungsanordnungen keine elektrischen Verbindersysteme integriert werden. Schließlich ist die Flexibilität der vorhandenen Verbindungsanordnungen begrenzt, was aufwendige Gestaltungen notwendig macht, um einen gleichzeitigen Anschluß von mit unterschiedlichen Orientierungen ankommenden Lichtwellenleitern zu ermöglichen.

Es ist daher Aufgabe der Erfindung, einen Ferrulencontainer sowie eine Verbindungsanordnung zum Verbinden von optischen Mehrfachfasern bereitzustellen, mit dem eine hohe Packungsdichte erreicht werden kann. Weiterhin soll eine hohe Flexibilität erreicht werden, wobei möglichst optische und elektrische Verbindungen in einem System bereitgestellt werden sollen. Weiterhin soll eine einfache Verbindung von optischen Mehrfachfasern gewährleistet sein, wobei die engen Toleranzen für optische Verbindungen eingehalten werden sollen.

Schließlich ist es noch Aufgabe der Erfindung, eine Verbindungsanordnung bereitzustellen, die insbesondere für modulartig aufgebaute elektronische Geräte mit mehreren, im wesentlichen parallel ausgerichteten Leiterplatteneinschüben verwendet kann, die von einer gemeinsamen Trägerplatine oder einer sogenannten Backplane-Platine getragen werden und über diese untereinander und nach außen hin optisch und gegebenenfalls auch elektrisch verbindbar sind.

Gemäß der Erfindung wird dies mit einem Ferrulencontainer gemäß Anspruch 1 und mit einer Verbindungsanordnung gemäß Anspruch 12 gelöst. Der Ferrulencontainer ist so ausgebildet, daß mehrere jeweils in Ferrulen angeordnete optische Fasern aufnehmbar sind. Durch diese Gestaltung läßt sich eine hohe Packungsdichte erreichen, da zur Verbindung mehrerer optischer Mehrfachfasern bereits ein einziger Ferrulencontainer ausreicht. Vorteilhafterweise sind sowohl Ferrulen mit Mehrfachfasern als auch Ferrulen mit Einfachfasern zusammen in dem erfindungsgemäßen Ferrulencontainer aufnehmbar. Schließlich ist es ferner auch denkbar sowohl optische als auch elektrische Verbindungen zusammen in einem Ferrulencontainer unterzubringen.

Dabei weist der erfindungsgemäße Ferrulencontainer vorteilhafterweise sich zueinander parallel erstreckende Ferrulenschächte zur Aufnahme der Ferrulen auf, wobei die Ferrulenschächte wenigstens je eine insbesondere betätigbare Ferrulen-Halteeinrichtung zur Fixierung der Ferrulen aufweisen.

Die Ferrulen-Halteeinrichtung gliedert sich in einen in einem Ferrulenschacht aufnehmbaren Federhalter, in eine Druckfeder sowie in im Aufnahmeschacht vorgesehene Federhalter-Rastnasen, wobei die Federhalter-Rastnasen vorteilhafterweise betätigbar ausgebildet sind. Mit einer solchen Ferrulen-Halteeinrichtung läßt sich eine Ferrule besonders einfach im Ferrulencontainer befestigen, wobei durch das Vorsehen einer auf die Ferrule einwirkenden Druckfeder ein Spielausgleich gewährleistet ist. Die Druckfeder ist nämlich so zwischen der Ferrule und dem Federhalter angeordnet, daß die Ferrule durch die Druckfeder an einen Anschlag im Ferrulenschacht gedrückt wird. Kommt das freie Stirnende der Ferrule mit dem freien Stirnende der optischen Mehrfachfasern einer weiteren Ferrule in Kontakt, kann die Ferrule gegen die Verformung der Druckfeder nach hinten in den Ferrulencontainer ausweichen und auf diese Weise Lageungenauigkeiten ausgleichen.

Wenn die Federhalter-Rastnasen betätigbar ausgebildet sind, dann kann die Ferrule auf einfache Weise aus dem Ferrulencontainer entnommen werden. Auf der anderen Seite ist es mit dem so ausgebildeten Ferrulencontainer auf einfache Weise möglich, eine Ferrule im Ferrulencontainer zu montieren.

Besonders vorteilhaft ist es, wenn der Ferrulencontainer außenseitig Verriegelungselemente aufweist, die so ausgebildet sind, daß der Ferrulencontainer in einem Boardgehäuse oder in einem Verbindungsgehäuse insbesondere lösbar fixierbar ist. Dadurch kann eine feste Verbindung zwischen dem Ferrulencontainer und einem Boardgehäuse oder einem Verbindungsgehäuse erzielt werden. Gerade bei dem Vorsehen eines Verbindungsgehäuses lassen sich so schnell lösbare und zuverlässige Verbindungen zwischen optischen Mehrfachfasern mit einer überaus hohen Packungsdichte erreichen.

Wenn mehrere Ferrulenschächte vorgesehen sind, die im Querschnitt eine rechteckige Innenform haben, wobei vorzugsweise je zwei Ferrulenschächte so angeordnet sind, daß sie im Querschnitt einer ihrer längeren Innenkanten unmittelbar nebeneinander zu liegen kommen, dann ergibt sich ein Ferrulencontainer mit einer besonders hohen Packungsdichte. Dabei hat der Ferrulencontainer im Querschnitt eine im wesentlichen quadratische Außenform. Dadurch läßt sich eine standardisierte Ausführung des erfindungsgemäßen Ferrulencontainers erreichen, so daß sich baukastenartige Verbindungsanordnungen auf einfache Weise zusammenstellen lassen.

Gerade bei einem Ferrulencontainer mit einem im wesentlichen quadratischen Querschnitt ist es von Vorteil, wenn außenseitig am Ferrulencontainer Ferrulencontainer-Kodierelemente vorgesehen sind, die so ausgebildet sind, daß mit ihnen eine Einschuborientierung des Ferrulencontainers in einem Boardgehäuse oder in einem Verbindungsgehäuse festlegbar ist. Dadurch lassen sich Montagefehler von vornherein auf einfache Weise vermeiden, wenn bereits bei der Auslegung einer Verbindungsanordnung die richtige Orientierung festgelegt wird.

Abweichend davon oder zusätzlich zu der vorstehenden Ausbildung kann der Ferrulencontainer im Querschnitt auch eine rechteckige Außenform haben. Dadurch bleiben von insgesamt vier möglichen Positionen des Ferrulencontainers in einem Verbindungselement nur noch zwei Orientierungen übrig, so daß sich eine besonders einfache Kodierung ergibt.

Im übrigen ist es auch möglich, den Ferrulencontainer auf der Boardseite, auf der Seite des Kabelsteckers und/oder insbesondere auch auf der Seite des - soweit vorhanden-Federhalters durch Vorsehen entsprechender Kodierelemente richtungsmäßig zu kodieren.

Schließlich ist noch vorgesehen, daß im Bereich des Einschubschachts bzw. der Einschubschächte und/oder im Bereich der Außenseite des Ferrulencontainers eine Abschirmung gegen elektromagnetische Einflüsse vorgesehen ist. Gerade bei kombiniertem Vorsehen von elektrischen und optischen Verbindungen wird hierbei für die elektrischen Verbindungen eine zuverlässige Abschirmung und ein störungsfreier Betrieb des Ferrulencontainers gewährleistet.

Schließlich weist der erfindungsgemäße Ferrulencontainer im Bereich einer Stirnseite wenigsten eine Führungsbohrung auf, in die ein Führungsstift einsetzbar ist. Auf diese Weise können mehrere Ferrulen über ein einziges Führungsstift/Führungsbohrungspaar zueinander ausgerichtet werden.

Bei einer besonderen Ausführung können bis zu zwei Mehrfaserferrulen in einen Ferrulencontainer eingebaut werden. Dabei ist es besonders vorteilhaft, daß für ein einwandfreies Funktionieren einer Verbindungsanordnung mit zwei aneinander zu koppelnden Ferrulen jeweils nur ein Ferrulenschacht der dafür notwendigen zwei Ferrulencontainer bestückt sein muß. Auf diese Weise wird eine maximale Packungsdichte der Lichtwellenleiter mit einer maximalen Flexibilität hinsichtlich der Verwendung der erfindungsgemäßen Ferrulencontainer kombiniert.

Die Aufgabe der Erfindung wird weiterhin durch eine Verbindungsanordnung zum Verbinden von optischen Mehrfachfasern gelöst, die die folgenden Merkmale aufweist:
- wenigstens einen ersten Ferrulencontainer zur Aufnahme wenigstens einer in einer ersten Ferrule angeordneten ersten optischen Mehrfachfaser,
- wenigstens ein insbesondere auf einer Platine anbringbares Boardgehäuse zur Aufnahme des ersten Ferrulencontainers,
- wenigsten ein insbesondere an einer Backplane anbringbares Duchführungsgehäuse zur Aufnahme wenigstens einer in einer zweiten Ferrule angeordneten zweiten optischen Mehrfachfaser,
wobei das Boardgehäuse und das Duchführungsgehäuse derart zusammensteckbar ausgebildet sind, daß eine Stirnseite der ersten Ferrule insbesondere plan an einer Stirnseite der zweiten Ferrule anliegt, wobei der erste Ferrulencontainer, das Boardgehäuse sowie das Durchführungsgehäuse weiterhin derart ausgebildet sind, daß in zusammengestecktem Zustand von Boardgehäuse und Durchführungsgehäuse eine zumindest formschlüssige Verbindung zwischen der ersten Ferrule und der zweiten Ferrule besteht.

Mit dieser Verbindungsanordnung läßt sich eine hohe Packungsdichte bei gleichzeitig großem Toleranzspielraum erzeugen. Dies ist besonders bei Anwendungsfällen wichtig, bei denen in einem modulartig aufgebauten Gerät mit mehreren Leiterplatteneinschüben und einer gemeinsamen Trägerplatte für die Leiterplatteneinschübe die Leiterplatten untereinander und nach außen hin optisch und gegebenenfalls auch elektrisch verbindbar sein müssen. Der Fachmann bezeichnet die Ebene der Trägerplatte der einzelnen Leiterplatten als "Backplane", während die Ebene eines Leiterplatteneinschubs als "Board" bezeichnet wird. Die Erfindung beruht dabei auf der erfindungswesendlichen Erkenntnis, daß eine Auftrennung der Verbindungsanordnung in die Bestandteile "Ferrulencontainer", "Boardgehäuse" und in das im Bereich der Backplaneebene angebrachte "Durchführungsgehäuse" für einen solchen Toleranzausgleich von großer Bedeutung ist. Durch eine solche Auftrennung der Einzelteile läßt sich nämlich erreichen, daß während des Transports eines Leiterplatteneinschubs eine feste Verbindung zwischen einem Ferrulencontainer und der Leiterplatte besteht, indem der Ferrulencontainer mit dem Boardgehäuse in Verbindung steht. Beim Einbringen des Leiterplatteneinschubs auf die Trägerplatte mit dem auf dieser vorgesehenen Durchführungsgehäuse kann dann eine feste Verbindung zwischen dem Ferrulencontainer und dem Duchführungsgehäuse erzeugt werden, während die Verbindung zwischen Ferrulencontainer und Boardgehäuse aufgehoben wird. Dadurch kann sich die Leiterplatte in großem Maße bezüglich der Trägerplatte verlagern, ohne daß dies negative, Auswirkung auf eine Verbindung zwischen einer Ferrule auf der Boardseite und einer gegenseitigen Ferrule hat.

Abweichend von der vorstehend ausgeführten Anwendung kann die erfindungsgemäße Verbindungsanordnung auch zur zuverlässigen und dennoch schnell lösbaren fliegenden Verbindung von Mehrfach-Lichtwellenleitern verwendet werden. Durch die Auftrennung der Verbindungsanordnung in Ferrulencontainer, Boardgehäuse und Durchführungsgehäuse können auf einfache Weise betätigbare lösbare Verbindungsanordnungen erzeugt werden. Hierzu ist insbesondere vorgesehen, daß die Verbindung zwischen einem in einem Boardgehäuse angeordneten Ferrulencontainer und einem in dem Durchgangsgehäuse angeordneten Ferrulencontainer dadurch hergestellt und wieder aufgelöst wird, daß das Boardgehäuse innerhalb des Durchführungsgehäuses bewegt wird, um die beiden Ferrulencontainer miteinander zu verriegeln.

Vorteilhafterweise ist bei der erfindungsgemäßen Verbindungsanordnung eine lösbare erste Verriegelungseinrichtung zur insbesondere kraftschlüssigen Verbindung von erstem Ferrulencontainer und Boardgehäuse sowie eine lösbare zweite Verriegelungseinrichtung zur insbesondere kraftschlüssigen Verbindung von erstem Ferrulencontainer und Durchführungsgehäuse vorgesehen. "Lösbar" bedeutet hierbei, daß zwischen einem verriegelten und einem gelösten Zustand des ersten Ferrulencontainers in dem Boardgehäuse bzw. in dem Durchführungsgehäuse hin- und hergeschaltet werden kann. Bei einem verriegelten Zustand ergibt sich eine im wesentlichen feste Verbindung zwischen Ferrulencontainer und Boardgehäuse bzw. Durchführungsgehäuse, während sich bei einem gelösten Zustand der Verriegelungseinrichtung der Ferrulencontainer innerhalb des Boardgehäuses bzw. innerhalb des Durchführungsgehäuses im wesentlichen frei bewegen kann.

Bei der erfindungsgemäßen Verbindungsanordnung befindet sich im zusammengesteckten Zustand von Boardgehäuse und Durchführungsgehäuse die erste Verriegelungseinrichtung in gelöstem Zustand und die zweite Verriegelungseinrichtung in gesperrtem Zustand, während sich in voneinander getrenntem Zustand von Boardgehäuse und Durchführungsgehäuse die erste Verriegelungseinrichtung in gesperrtem Zustand befindet. In voneinander getrenntem Zustand von Boardgehäuse und Durchführungsgehäuse tritt die zweite Verriegelungseinrichtung nicht in Aktion.

Dabei ist vorteilhafterweise die erste Verriegelungseinrichtung so ausgebildet, daß sie durch einen Bewegung des Boardgehäuses in Richtung weg vom Durchführungsgehäuse von einem gelösten Zustand in einen gesperrten Zustand bringbar ist, wobei dies insbesondere auch automatisch im Zuge der Bewegung des Boardgehäuses erfolgen kann. Bei einer Bewegung des Boardgehäuses in Richtung zum Durchführungsgehäuse hin dagegen ist die erste Verriegelungseinrichtung vorteilhafterweise in einen gelösten Zustand bringbar, wobei auch dies automatisch alleine aufgrund der Bewegung des Boardgehäuses in Richtung zum Durchführungsgehäuse hin erfolgen kann. Durch diese Ausgestaltungen ist gewährleistet, daß sich die erste Verriegelungseinrichtung in getrenntem Zustand von Boardgehäuse und Durchführungsgehäuse in gesperrtem Zustand befindet, während bei zusammengestecktem Zustand von Boardgehäuse und Durchführungsgehäuse die erste Verriegelungseinrichtung in gelöstem Zustand befindlich ist.

Was die zweite Verriegelungseinrichtung betrifft, so ist diese vorzugsweise so ausgebildet, daß sie durch eine Bewegung des Boardgehäuses in Richtung zum Durchführungsgehäuse hin in einen gesperrten Zustand bringbar ist, und so, daß sie eine feste Verbindung zwischen erstem Ferrulencontainer und Duchführungsgehäuse erzeugt. Dabei ist vorgesehen, daß die zweite Verriegelungseinrichtung automatisch in einen gesperrten Zustand übergeht, wenn das Boardgehäuse in Richtung zum Durchführungsgehäuse hin bewegt wird. Demgegenüber wird die zweite Verriegelungseinrichtung bei einer Bewegung des Boardgehäuses in Richtung vom Durchführungsgehäuse weg in einen gelösten Zustand gebracht. Die vorstehenden Betätigungen der zweiten Verriegelungseinrichtung sind dabei insbesondere so vorgesehen, daß sie bei einer Bewegung des Boardgehäuses automatisch erfolgen.

Zum Verrasten der ersten Verriegelungseinrichtung sind im Bereich des Ferrulencontainers Schnapphaken sowie im Bereich des Boardgehäuses Boardgehäuse-Rastnasen vorgesehen. Weiterhin kann die erste Verriegelungseinrichtung im Bereich des Durchführungsgehäuses vorgesehene erste Auswerfernasen aufweisen. Dadurch wird eine automatisierte Betätigung bzw. ein automatisiertes Lösen der ersten Verriegelungseinrichtung begünstigt.

Ebenso kann die zweite Verriegelungseinrichtung im Bereich des Ferrulencontainers vorgesehene Schnapphaken sowie seitens des Durchführungsgehäuses vorgesehene Duchführungsgehäuse-Rastnasen aufweisen, wobei zum Lösen der zweiten Verriegelungsvorrichtung auch im Bereich des Durchführungsgehäuses zweite Auswerfernasen vorgesehen sein können.

Durch die vorstehende Ausbildung ist eine automatisierte Betätigung der zweiten Verriegelungseinrichtung gewährleistet. Dabei ergibt sich eine besonders einfache Verbindungsanordnung dann, wenn die Schnapphaken der zweiten Verriegelungseinrichtung und die Anlaufabsätze durch dieselben Strukturen gebildet sind.

Die hier beschriebene Erfindung ermöglicht den Aufbau eines optischen Verbindersystems mit einer sehr hohen Packungsdichte. Dabei ist es möglich, die Erfindung sowohl als alleinstehende Lösung auszuführen als auch die Erfindung in bereits bestehende elektrische Systeme zu integrieren. Die in elektrischen Verbindersystemen auftretenden Toleranzen werden so abgefangen, daß die für optische Verbindungen verpflichtenden Toleranzen eingehalten werden können. Zusätzlich bietet die Erfindung durch ihren modularen und symmetrischen Aufbau die Möglichkeit, alle in der Praxis auftretenden Anwendungsfälle abdecken zu können. Die erfindungsgemäße Lösung stellt eine Verbindungsanordnung bereit, die sowohl die großen axialen Toleranzen von mehreren Millimetern für elektrische Systeme als auch die geringen axialen Toleranzen von wenigen Mikrometern für optische Verbindungen zu gewährleisten in der Lage ist. Dadurch können sogar Durchbiegungen innerhalb der Backplane ausgeglichen werden, wobei eine überaus hohe Packungsdichte erreicht wird.

Die Erfindung ist in der Zeichnung anhand eines Ausführungsbeispiels näher beschrieben.

Figur 1 zeigt eine explosionsartige perspektivische Darstellung einer erfindungsgemäßen Verbindungsanordnung mit zwei erfindunsgemäßen Ferrulencontainern,

Figur 2 zeigt eine perspektivische Darstellung der Ferrulencontainer aus Figur 1 in näherem Detail,

Figur 3 zeigt eine perspektivische Darstellung der Verbindungsanordnung aus Figur 1 in ungestecktem Zustand, wobei die Bauteile der Verbindungsanordnung teilweise geschnitten dargestellt sind,

Figur 4 zeigt die Verbindungsanordung aus Figur 3 in verrastetem Zustand,

Figur 5, Figur 6, Figur 7 und Figur 8 zeigen die Verbindungsanordnung aus Figur 3 in verschiedenen Stellungen zwischen einem gelösten und einem verrasteten Zustand.

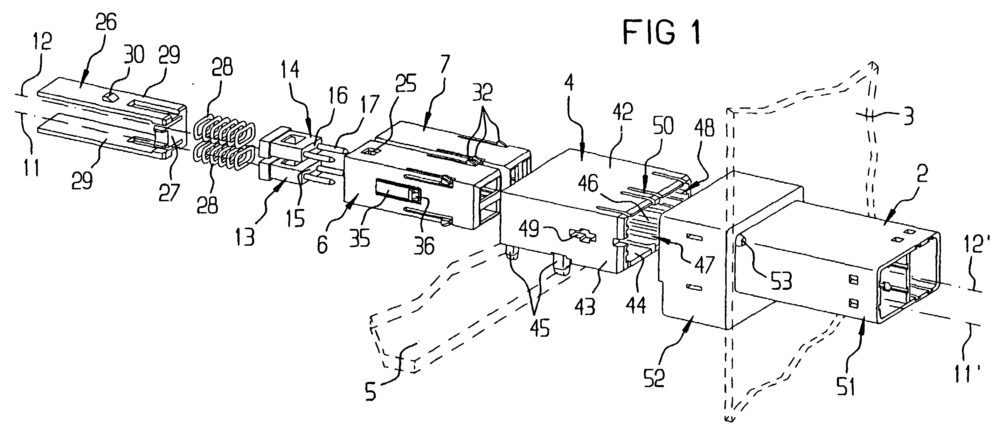

Figur 1 zeigt eine erfindungsgemäße Verbindungsanordnung 1 in explosionsartiger perspektivischer Darstellung. Die Verbindungsanordung 1 gliedert sich in ein Durchführungsgehäuse 2, das auf einer Trägerplatte 3 angeordnet ist, in ein Boardgehäuse 4, das auf einer Leiterplatte 5 angeordnet ist, sowie in- einen ersten Ferrulencontainer 6 und in einen zweiten Ferrulencontainer 7. Die Verbindungsanordnung 1 dient zum Verbinden eines ersten Mehrfach-Lichtwellenleiters 11 mit einem zweiten Mehrfach-Lichtwellenleiter 11' sowie eines dritten Mehrfach-Lichtwellenleiters 12 mit einem vierten Mehrfach-Lichtwellenleiter 12', die jeweils nur durch eine Symmetrielinie dargestellt sind.

Der erste Ferrulencontainer 6 ist so ausgebildet, daß er den ersten Mehrfach-Lichtwellenleiter 11 und den dritten Mehrfach-Lichtwellenleiter 12 aufnehmen kann. Dabei sind die einzelnen Fasern am Ende des ersten Mehrfach-Lichtwellenleiters 11 und am Ende des dritten Mehrfach-Lichtwellenleiters 12 nebeneinander in einer ersten Ferrule 13 und in einer zweiten Ferrule 14 aufgenommen, und zwar derart, daß die Stirnenden der einzelnen Fasern mit einem ersten Stirnende 15 der ersten Ferrule 13 bzw. mit einem zweiten Stirnende 16 der zweiten Ferrule 14 bündig abschließen. Im ersten Stirnende 15 und im zweiten Stirnende 16 sind weiterhin Führungsstifte 17 vorgesehen, wobei die erste Ferrule 13 zwei Führungsstifte 17 aufweist und wobei die zweite Ferrule 14 ebenfalls zwei Führungsstifte 17 aufweist. In der Zeichnung ist nur einer der vier Führungsstifte 17 mit einer Bezugsziffer bezeichnet. Die austretenden Enden der Einzelfasern des ersten Mehrfach-Lichtwellenleiters 11 und des dritten Mehrfach-Lichtwellenleiters 12 sind in der Zeichnung nur als dünne Punkte angedeutet, die sich innerhalb der ersten Ferrule 13 und innerhalb der zweiten Ferrule 14 jeweils zwischen den Führungsstiften 17 erstrecken.

Die erste Ferrule 13 und die zweite Ferrule 14 haben im Querschnitt quer zur Erstreckung des ersten Mehrfach-Lichtwellenleiters 11 und des dritten Mehrfach-Lichtwellenleiters 12 jeweils einen rechteckigen Querschnitt. Der zweite Mehrfach-Lichtwellenleiters 11' und der vierte Mehrfach-Lichtwellenleiter 12' weisen ebenfalls Ferrulen auf, die jedoch in dieser Ansicht nicht dargestellt sind.

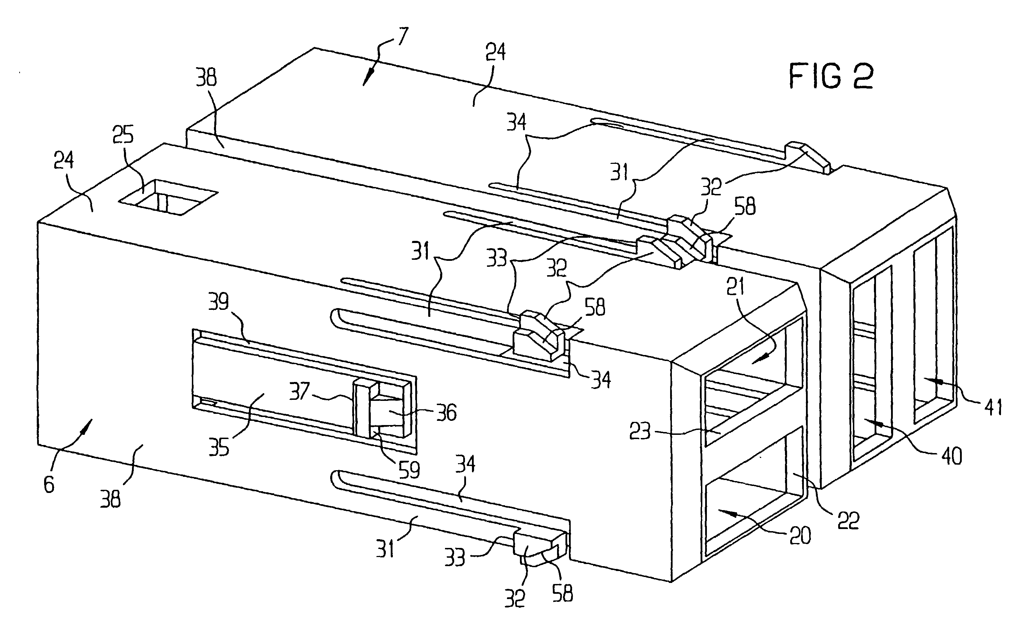

Der erste Ferrulencontainer 6 dient zur Aufnahme der ersten Ferrule 13 und der zweiten Ferrule 14. Der erste Ferrulencontainer 6 hat eine im wesentlichen quaderförmige Außenform und weist im Inneren einen unteren Ferrulenschacht 20 sowie einen oberen Ferrulenschacht 21 auf, wie am besten in Figur 2 zu sehen ist. Der untere Ferrulenschacht 20 und der obere Ferrulenschacht 21 erstrecken sich übereinanderliegend in Längsrichtung des ersten Ferrulencontainers 6. Dabei hat der untere Ferrulenschacht 20 eine untere Ferrulen-Austrittsöffnung 22, während der obere Ferrulenschacht 21 eine obere Ferrulen-Austrittsöffnung 23 aufweist. Bei eingesetztem Zustand der ersten Ferrule 13 in den unteren Ferrulenschacht 20 ragt das erste Stirnende 15 aus der unteren Ferrulen-Austrittsöffnung 22, während bei eingesetztem Zustand der zweiten Ferrule 14 in den oberen Ferrulenschacht 21 das zweite Stirnende 16 aus der oberen Ferrulen-Austrittsöffnung 23 ragt. Im Bereich einer oberen Begrenzungswand 24 ist am von der oberen Ferrulen-Austrittsöffnung 23 abgewandten Ende des ersten Ferrulencontainers 6 eine Rastnasenöffnung 25 mit quadratischen Umriß eingebracht. Eine ebensolche Rastnasenöffnung - in dieser Darstellung nicht zu erkennen - befindet sich in der unteren Begrenzungswand des unteren Ferrulenschachts 20, und zwar genau gegenüberliegend von der Rastnasenöffnung 25.

Die Funktion der Rastnasenöffnung 25 wird im Zusammenhang mit einem in Figur 1 dargestellten Federhalter 26 ersichtlich. Bei eingesetztem Zustand der ersten Ferrule 13 und der zweiten Ferrule 14 in den ersten Ferrulencontainer 6 drückt der Federhalter 26 diese mit einer Stirnfläche 27 über je eine Druckfeder 28 in Richtung der Austrittsöffnungen 21 und 22. Zur Fixierung des Federhalters 26 im ersten Ferrulencontainer 6 sind zwei sich ausgehend von der Stirnfläche 27 U-förmig nach hinten erstreckende Schenkel 29 vorgesehen, die nach außen hin zu der Begrenzungswand des ersten Ferrulencontainers 6 hin abstehende Federhalter-Rastnasen 30 aufweisen, von denen in Figur 1 nur eine obere Federhalter-Rastnase 30 zu sehen ist. In vollständig eingeführtem Zustand des Federhalters 26 in den ersten Ferrulencontainer 6 rasten die Federhalter-Rastnasen 30 in den Rastnasenöffnungen 25 ein. Dabei werden die Druckfedern 28 zusammengedrückt, so daß die erste Ferrule 13 und die zweite Ferrule 14 unter einer Vorspannung in den Austrittsöffnungen 22 und 23 gehalten werden. Bei der Demontage des ersten Ferrulencontainers 6 werden die Federhalter-Rastnasen 30 mit einem Werkzeug aus den Rastnasenöffnungen 25 gedrückt, worauf der Federhalter 26 aus dem ersten Ferrulencontainer 6 entnommen werden kann.

Wie in Figur 2 am besten zu sehen ist, weist der erste Ferrulencontainer 6 an seinen längeren Außenkanten insgesamt vier Federzungen 31 auf, die sich in Längsrichtung des Ferrulencontainers 6 erstrecken und deren Enden quer zu den Längsrichtungen des Ferrulencontainers 6 beweglich sind. An den Enden der Federzungen 31 sind Schnapphaken 32 vorgesehen, die jeweils eine nach hinten zu der Rastnasenöffnung 25 gerichtete Rastkante 33 aufweisen. Die Schnapphaken 32 verjüngen sich nach vorne in Richtung auf die Austrittsöffnungen 22 und 23 hin. Die Schnapphaken 32 sind dabei so ausgebildet, daß sie im Ruhezustand, der in Figur 2 gezeigt ist, mit ihren Außenkanten über die äußeren Oberflächen der seitlichen Begrenzungsflächen des ersten Ferrulencontainers 6 hinausragen. Sie sind weiterhin so ausgebildet, daß bei einer Beaufschlagung der Schnapphaken 32 quer zu der Längsrichtung des ersten Ferrulencontainers 6 die Federzunge 31 nachgiebt, so daß der Schnapphaken 32 in eine Kantenöffnung 34 des ersten Ferrulencontainers 6 einrückt.

Schließlich weist der erste Ferrulencontainer 6 noch eine seitliche Federzunge 35 mit einem seitlichen Schnapphaken 36 auf. Der seitliche Schnapphaken 36 hat an seinem hinteren Ende eine seitliche Rastkante 37 und läuft nach vorne hin sich verjüngend zu. Der seitliche Schnapphaken 36 steht über die äußere Oberfläche einer seitlichen Begrenzungswand 38 des ersten Ferrulencontainers 6 ab und kann unter einer diesen beaufschlagenden Kraft in eine in der seitlichen Begrenzungswand 38 vorgesehene seitliche Öffnung 39 eingedrückt werden. Dabei ist noch eine weitere, in dieser Ansicht nicht dargestellte seitliche Federzunge mit einem seitlichen Schnapphaken vorgesehen, die im wesentlichen der seitlichen Federzunge 35 mit dem seitlichen Schnapphaken 36 entspricht. Die Schnapphaken haben die selben Geometrien und Abmessungen, sind jedoch an jeweils gegenüberliegenden Seiten angebracht.

Der zweite Ferrulencontainer 7 entspricht im wesentlichen dem ersten Ferrulencontainer 6. Wie man in der Darstellung in Figur 2 am besten sieht, weist der zweite Ferrulencontainer 7 jedoch keinen unteren bzw. oberen Ferrulenschacht auf, sondern vielmehr einen linken Ferrulenschacht 40 sowie einen rechten Ferrulenschacht 41. Der linke Ferrulenschacht 40 und der rechte Ferrulenschacht 41 entsprechen hinsichtlich der Abmessungen dem unteren Ferrulenschacht 20 und dem oberen Ferrulenschacht 21, sie sind jedoch hinsichtlich ihrer Ausrichtung bezüglich der Längsachse des zweiten Ferrulencontainers 7 um 90° gegenüber der Ausrichtung des unteren Ferrulenschachts 20 und des oberen Ferrulenschachts 21 gedreht.

Im übrigen sind gleichen Bestandteilen des gleichen Ferrulencontainers 7 die gleichen Bezugsziffern gegeben, wie dem ersten Ferrulencontainer 6. Insbesondere weist der zweite Ferrulencontainer 7 eine seitliche Begrenzungswand 38 auf, die eine seitliche Federzunge mit einem seitlichen Schnapphaken und einer seitlichen Rastkante aufweist, die der seitlichen Federzunge 35, dem seitlichen Schnapphaken 36 und der seitlichen Rastkante 37 des ersten Ferrulencontainers 6 hinsichtlich der Lage und der Ausrichtung und den Dimensionen identisch entsprechen. Diese Bauteile sind in Figur 2 und Figur 1 nicht dargestellt. Die obere Begrenzungswand 24 des zweiten Ferrulencontainers 7 hat jedoch keine Rastnasenöffnung. Diese Rastnasenöffnung des zweiten Ferrulencontainers 7 befindet sich vielmehr an einer entsprechenden Stelle in der seitlichen Begrenzungswand 38 sowie in der dazu gegenüberliegenden anderen Begrenzungswand des zweiten Ferrulencontainers 7. Durch die besondere Anordnung der seitlichen Federzungen 35 im ersten Ferrulencontainer 6 und im zweiten Ferrulencontainer 7 wird deren orientierungsmäßige Kodierung bewirkt.

Das Bordgehäuse 4 ist am besten in Figur 1 zu sehen. Das Bordgehäuse 4 ist als im wesentlichen quaderförmiges Gehäuse ausgebildet, das eine obere Wand 42 und zwei zueinander symmetrische Seitenwände 43 aufweist. An der Unterseite einer unteren Wand 44 sind vier Steckzapfen 45 ausgebildet, mit denen das Bordgehäuse 4 in entsprechenden Öffnungen in der Leiterplatte 5 fest eingepreßt ist. Die Stirnwände des Bordgehäuses 4 sind nach beiden Seiten hin offen, wobei der im Inneren des Bordgehäuses 4 befindliche und von den Wänden 42, 43 und 44 umschlossene Hohlraum durch eine Mittelwand 46 in einen ersten Durchgangskanal 47 und in einen zweiten Durchgangskanal 48 aufgeteilt ist. Der erste Durchgangskanal 47 und der zweite Durchgangskanal 48 sind von den Abmessungen her so gehalten, daß der erste Ferrulencontainer 6 im ersten Durchgangskanal 47 aufnehmbar ist, während der zweite Ferrulencontainer 7 im zweiten Durchgangskanal 48 aufnehmbar ist.

In den Seitenwänden 43 und in der Mittelwand des Boardgehäuses 4 sind seitliche Rastnasenöffnungen 49 vorgesehen, von denen in der Ansicht in Figur 1 nur die seitliche Rastnasenöffnung 49 des ersten Durchgangskanals 47 zu sehen ist. An der Oberseite des Bordgehäuses 4 und an Innenkanten des ersten und zweiten Durchgangskanals 47, 48 sind feststehende Bordgehäuse-Auswerferstrukturen 50 ausgeführt.

Die seitlichen Rastnasenöffnungen 49 sind so ausgebildet, daß sie bei eingeführtem Zustand der ersten und zweiten Ferrulencontainer 6 und 7 mit den seitlichen Schnapphaken 36 zusammenwirken. Demgegenüber ist die Bordgehäuse-Auswerferstruktur 50 so ausgebildet, daß sie bei eingeschobenem Zustand der ersten und zweiten Ferrulencontainer 6, 7 in den ersten Durchgangskanal 47 und in den zweiten Durchgangskanal 48 mit den oben liegenden Schnapphaken 32 zusammenwirkt.

Das Durchführungsgehäuse 2 gliedert sich in einen Ferrulenbereich 51 und in einen Board-Aufnahmebereich 52, die jeweils für sich gesehen eine quaderförmige Außenform unterschiedlicher Größe haben. Dabei ist der Ferrulenbereich 51, der zur Aufnahme des zweiten Mehrfach-Lichtwellenleiters 11' und des dritten Mehrfach-Lichtwellenleiters 12' bestimmt ist, im Querschnitt quer zum Verlauf der Mehrfach-Lichtwellenleiter 11' und 12' kleiner gehalten als der Board-Aufnahmebereich 52. Im Übergangsbereich zwischen dem Ferrulenbereich 51 und dem Board-Aufnahmebereich 52 weist das Durchführungsgehäuse 2 einen Steckzapfen 53 auf, der in eine entsprechende, hier nicht dargestellte Öffnung in der Trägerplatte 3 eingepreßt ist. Diagonal versetzt zum Steckzapfen 53 ist ein weiterer, hier nicht sichtbarer Steckzapfen am Durchführungsgehäuse 2 vorgesehen. Dabei weist die Trägerplatte 3 eine im wesentlichen rechteckige Öffnung auf, deren Umriß im wesentlichen mit den Außenmaßen des Ferrulenbereichs 51 übereinstimmt. Dadurch ist der Durchtritt des Ferrulenbereichs 51 durch die Trägerplatte 3 gewährleistet.

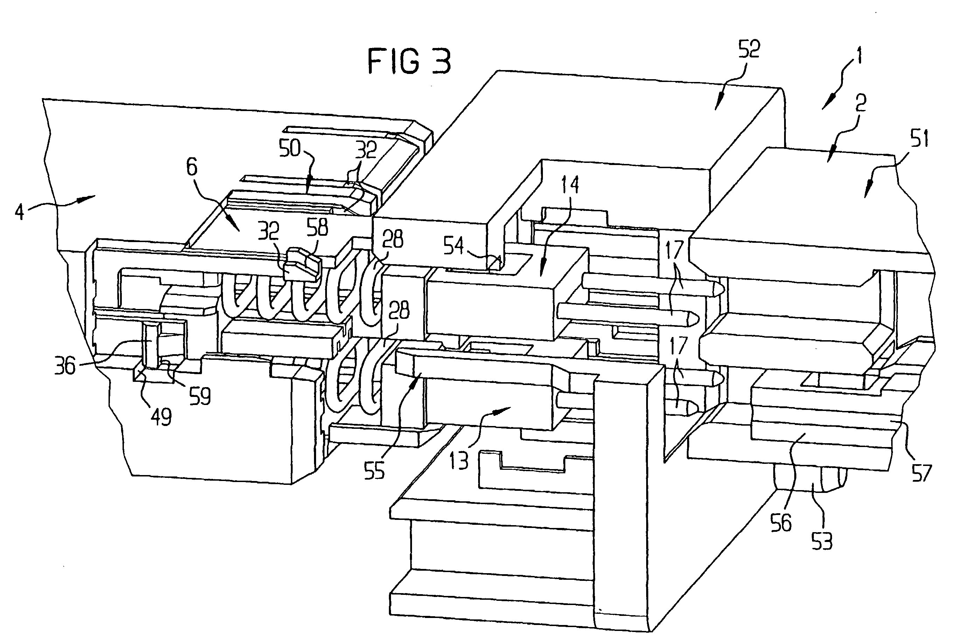

Der Aufbau des Boardgehäuses 4 und des Durchführungsgehäuses 2 sowie das Zusammenwirken von Ferrulencontainer 6, 7 und Boardgehäuse 4 und Durchführungsgehäuse 2 ist noch besser in den Figuren 3 bis 8 nachzuvollziehen, die einen Ein- und Aussteckvorgang der im Boardgehäuse 4 geführten Ferrulencontainer 6 und 7 in das Durchführungsgehäuse 2 veranschaulichen.

Wie in Figur 3 am besten zu sehen ist, weist das Durchführungsgehäuse 2 innenseitig Durchführungs-Rastnasen 54 sowie drei Durchführungs-Auswerferstrukturen 55 auf, von denen in Figur 3 nur eine einzige zu sehen ist, weil die symmetrisch gegenüberliegende andere Durchführungs-Auswerferstruktur durch andere Bauteile verdeckt ist. Zwischen diesen außenseitigen Durchführungs-Auswerferstrukturen 55 liegt noch eine mittige Durchführungs-Auswerferstruktur, die für das Freigeben der nach "innen" liegenden Schnapphaken der Ferrulencontainer sorgt. Die Durchführungs-Rastnasen 54 wirken mit entsprechenden Schnapphaken an den Kanten der Ferrulencontainer 6, 7 zusammen, während die Durchführungs-Auswerferstruktur 55 auf die seitlichen Schnapphaken 36 der Ferrulencontainer 6, 7 einwirkt. In der Darstellung in Figur 3 ist eine dritte Ferrule 56 in den Ferrulenbereich 51 eingeschoben dargestellt, wobei die dritte Ferrule 56 zudem im Bereich einer Führungsbohrung 57 längsgeschnitten dargestellt ist. Die Führungsbohrung 57 nimmt bei zusammengefügtem Zustand der dritten Ferrule 56 mit der ersten Ferrule 13 einen Führungsstift 17 auf, so daß die Stirnenden der dritten Ferrule 56 und der ersten Ferrule 13 genau zueinander positioniert sind, was eine geringe Einfügedämpfung bei der optischen Verbindung der Einzelfasern der Lichtwellenleiter 11 und 11' gewährleistet.

Figur 3 zeigt das zusammengebaute System der Verbindungsanordnung 1 aus Figur 1 in noch ungestecktem Zustand. Dabei sind Schnitte eingeführt, um die Vorgänge verdeutlichen zu können. Der Ferrulencontainer 6 ist in diesem Zustand mit den seitlichen Schnapphaken 36 in den seitlichen Rastnasenöffnungen 49 des Boardgehäuses 4 verrastet.

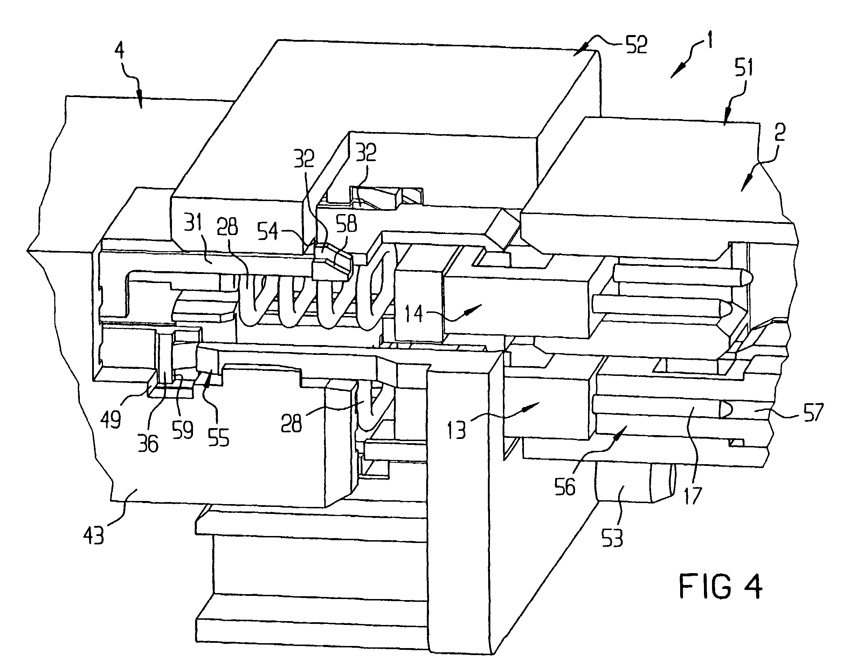

Beim Einführen des mit den Ferrulencontainern 6, 7 bestückten Boardgehäuses 4 in das Durchführungsgehäuse 2 rasten die Schnapphaken 32 der Ferrulencontainer 6, 7 in den Rastnasen 54 in dem Durchführungsgehäuse 2 ein. Dieser verrastete Zustand ist in Figur 4 dargestellt.

Wie in Figur 4 besonders gut zu sehen ist, liegen die Durchführungs-Auswerferstrukturen 55 in diesem Zustand gerade an den seitlichen Schnapphaken 36 des Ferrulencontainers 6 an. Die Boardgehäuse-Auswerferstrukturen 50 liegen in diesem Zustand gerade an den Schnapphaken 32 der Ferrulencontainer 6, 7 an, was in Figur 4 jedoch nicht zu sehen ist.

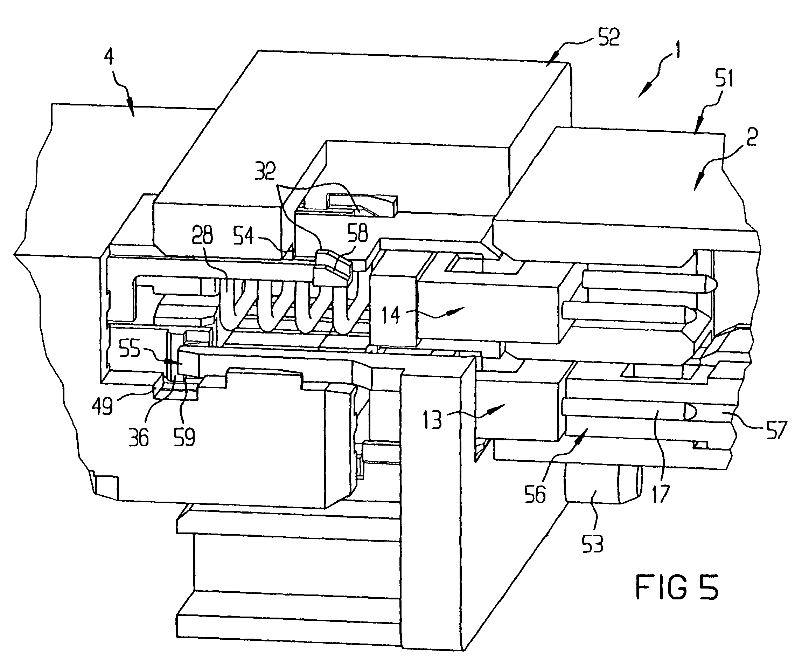

Wird der ausgehend von Figur 3 über den Zustand von Figur 4 vorgenommene Steckvorgang nun weiter ausgeführt, indem das Boardgehäuse 4 noch weiter in Richtung Durchgangsgehäuse 2 geschoben wird, so werden die seitlichen Schnapphaken 36 der Ferrulencontainer 6, 7 durch die im Durchführungsgehäuse 2 vorhandenen Auswerferstrukturen 55 nach innen gedrückt, bis sie aus den seitlichen Rastnasenöffnungen 49 ausrücken, wie in Figur 5 besonders gut zu sehen ist.

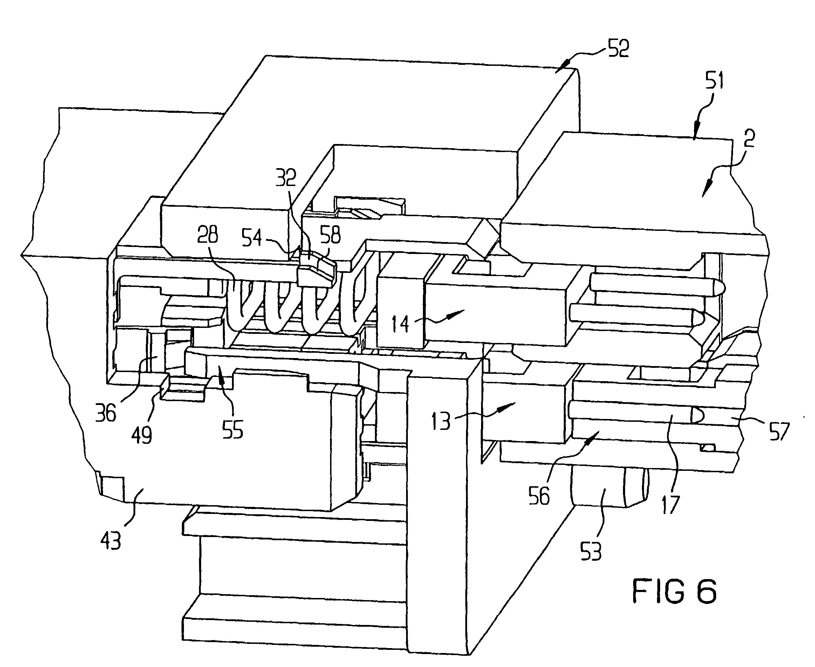

Durch die beim Einschieben des Boardgehäuses 4 in das Durchführungsgehäuse 2 wirkenden Längskräfte insbesondere der dritten Ferrule 56 auf die erste Ferrule 13 werden die Ferrulencontainer 6, 7 daraufhin zurückgedrückt, bis die Schnapphaken 32 an den Durchführungs-Rastnasen 54 anliegen. Dieser Zustand ist am besten in Figur 6 zu sehen. Die seitlichen Schnapphaken 36 bleiben durch die Wirkung der Seitenwand 43 in einer zurückgedrückten Position, wobei sich die Ferrulencontainer 6, 7 frei bezüglich des Boardgehäuses 4 bewegen können.

Daher kann sich das Boardgehäuse 4 zusammen mit der Leiterplatte 5 frei bezüglich der Trägerplatte 3 bewegen, ohne daß die definierte Position der Mehrfach-Lichtwellenleiter 11, 11', 12, 12' zueinander verändert wird.

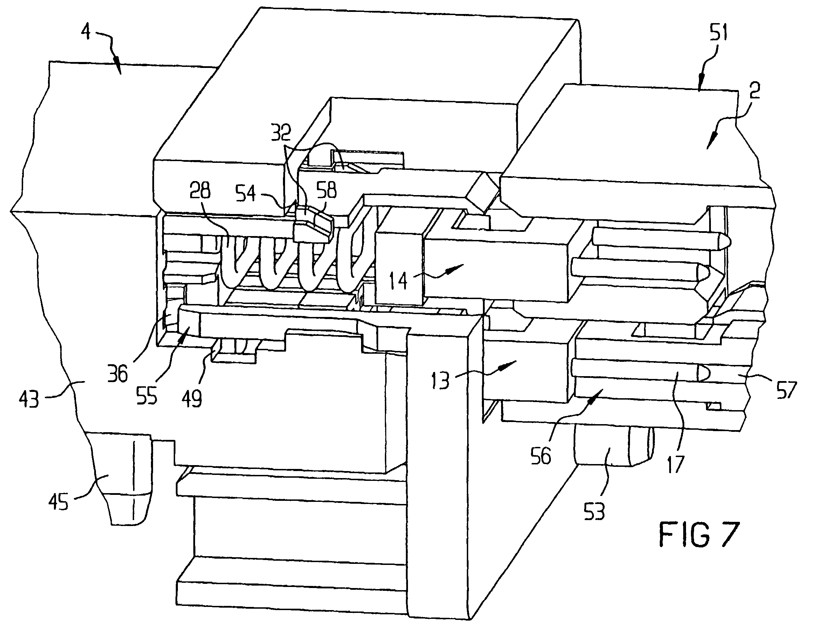

Figur 7 zeigt den Fall einer maximalen weiteren Bewegung des Boardgehäuses 4 in Richtung auf das Durchführungsgehäuse 2.

Solange die Ferrulencontainer 6, 7 in dem Durchführungsgehäuse 2 verrastet sind, ragen die oberen Enden der Schnapphaken 32 durch Schlitze im Bereich der Boardgehäuse-Auswerferstrukturen 50 hindurch. Dieser Zustand ist am besten in Figur 4 zu sehen, in der sich die Federzungen 31 in einem geraden Zustand befinden.

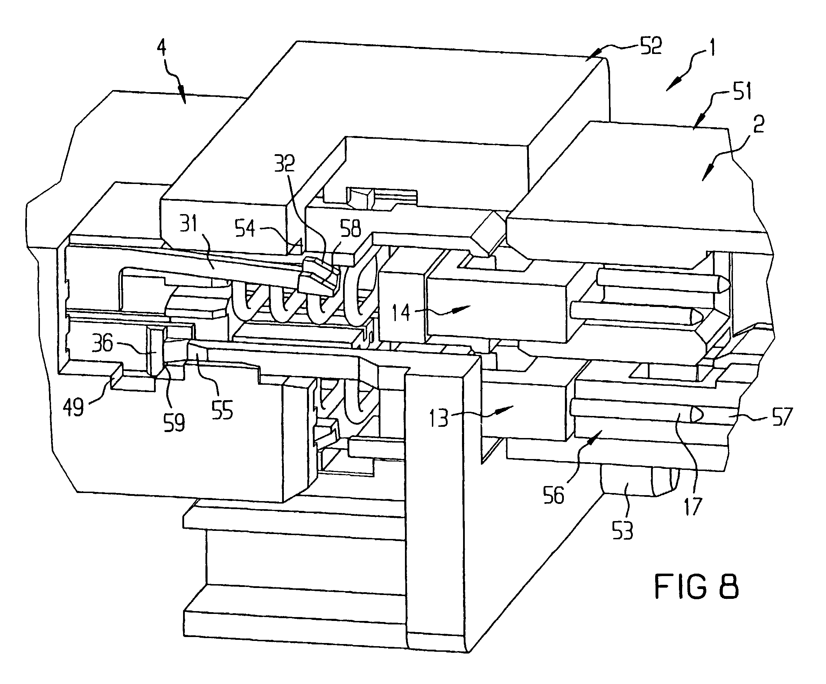

Wird in dem Zustand gemäß Figur 4 die Leiterplatte 5 von der Trägerplatte 3 abgezogen, so bewegt sich das Boardgehäuse 4 zusammen mit der Leiterplatte 5 in einer Richtung vom Durchführungsgehäuse 2 weg. Dabei treten die Boardgehäuse-Auswerferstrukturen mit im Bereich der Schnapphaken 32 vorgesehenen Anlaufabsätzen 58 in Kontakt, so daß die Schnapphaken 32 unter Verbiegung der Federbügel 31 nach innen gedrückt werden, wie am besten in Figur 8 zu sehen ist. Dadurch lösen sich die Schnapphaken 32 von den Durchführungs-Rastnasen 54.

Gleichzeitig liegen die seitlichen Schnapphaken 36 mit einem nach vorne gerichteten Absatz 59 an einer entsprechenden Wand der seitlichen Rastnasenöffnung 49 an, was verhindert, daß der Ferrulencontainer 6 beim Herausziehen des Boardgehäuses 4 aus dem Durchführungsgehäuse 2 im Durchführungsgehäuse 2 verbleibt. Vielmehr wird beim Herausziehen des Boardgehäuses 4 in dem in Figur 8 gezeigten Zustand aufgrund des Zusammenwirkens des Absatzes 59 mit der seitlichen Rastnasenöffnung 49 der Ferrulencontainer 6 mit dem Boardgehäuse 4 mitbewegt. Nach dem Herausziehen des Boardgehäuses 4 aus dem Durchführungsgehäuse 2 befindet sich die Verbindungsanordnung 1 wieder in dem in Figur 3 gezeigten Zustand.

Durch den vorstehend beschriebenen Verrastmechanismus ist die Position der Ferrulen 13, 14 und 56 zueinander im eingesteckten Zustand entkoppelt von einem Umgehäuse wie dem Boardgehäuse. Dadurch wird ein großer Toleranzausgleich unter Beibehaltung der für die optische Verbindung zwingenden Toleranzen ermöglicht. Dies macht es möglich, zusammen neben optischen Verbindungen auch elektrische Verbindungen im Bereich der Verbindungsanordnung 1 vorzusehen, deren Vorsehen die größeren Toleranzen erfordert.

Ein weiterer Vorteil der Verbindungsanordnung 1 besteht darin, daß die Position der Ferrulen 13, 14 und 56 nach dem Verrasten unabhängig von der Lage der Leiterplatte 5 bezüglich der Trägerplatte 3 zueinander gehalten wird. Auf diese Art und Weise wird die durch die Druckfedern 28 auszugleichende Toleranzstrecke auf einen definierten maximalen Wert festgesetzt.

Weiterhin lassen sich mit der Verbindungsanordnung 1 überaus hohe Packungsdichten erreichen.

## Patentansprüche

1. Ferrulencontainer **(6, 7)** zur Aufnahme **mehrerer** jeweils in Ferrulen **(13, 14)** angeordneter optischer **Mehrfachfasern** (11, 12) **wobei**
sich zueinander parallel erstreckende Ferrulenschächte (20, 21; 40, 41) zur Aufnahme der Ferrulen (13, 14) vorgesehen sind,
**wobei**
die Ferrulenschächte (20, 21; 40, 41) wenigstens je eine insbesondere betätigbare Ferrulen-Halteeinrichtung (25, 26, 28, 30) zur Fixierung der Ferrulen (13, 14) aufweisen,
**und wobei**
sich die Ferrulen-Halteeinrichtung in einen in einem Ferrulenschacht (20, 21; 40, 41) aufnehmbaren Federhalter (26), in eine Druckfeder (28) sowie in im Ferrulenschacht oder am Federhalter (26) vorgesehene und in im Ferrulenschacht (20, 21; 40, 41) oder am Federhalter vorgesehene Rastnasenöffnungen (25) eingreifende Federhalter-Rastnasen(30) gliedert, wobei der Federhalter insbesondere durch die Anordnung von Rastnasenöffnungen (25) und Federhalter-Rastnasen (30) richtungsmäßig kodierbar ausgestaltet sein kann.

2. Ferrulencontainer nach Anspruch **1**,
dadurch gekennzeichnet, daß
die Federhalter-Rastnasen (30) betätigbar ausgebildet sind.

3. Ferrulencontainer nach einem der vorhergehenden Ansprüche,
dadurch gekennzeichnet, daß
außenseitig Verriegelungselemente (32, 36) vorgesehen sind, die so ausgebildet sind, daß der Ferrulencontainer (6, 7) in einem Boardgehäuse (4) oder in einem Verbindungsgehäuse (2) fixierbar ist.

4. Ferrulencontainer nach Anspruch **3,**
dadurch gekennzeichnet, daß
die Verriegelungselemente (32, 36) so ausgebildet sind, daß der Ferrulencontainer (6, 7) lösbar fixierbar ist.

5. Ferrulencontainer nach einem der vorhergehenden Ansprüche,
gekennzeichnet durch die folgenden Merkmale:
- es sind mehrere Ferrulenschächte (20, 21; 40, 41) vorgesehen,
- die Ferrulenschächte (20, 21; 40, 41) haben im Querschnitt im wesentlichen eine rechteckige Innenform.

6. Ferrulencontainer nach Anspruch **5**,
dadurch gekennzeichnet, daß
je zwei Ferrulenschächte (20, 21; 40, 41) so angeordnet sind, daß im Querschnitt jeweils eine ihrer längeren Innenkanten unmittelbar nebeneinander liegen.

7. Ferrulencontainer nach einem der Ansprüche 1 bis **6,**
dadurch gekennzeichnet, daß
der Ferrulencontainer im Querschnitt im wesentlichen eine quadratische Außenform hat.

8. Ferrulencontainer nach Anspruch **7**,
dadurch gekennzeichnet, daß
außenseitig am Ferrulencontainer Ferrulencontainer-Codierelemente vorgesehen sind, die so ausgebildet sind, daß mit ihnen eine Einschuborientierung des Ferrulencontainers in einem Boardgehäuse oder in einem Verbindungsgehäuse festlegbar ist.

9. Ferrulencontainer nach einem der Ansprüche 1 bis **8** ,
dadurch gekennzeichnet, daß
der Ferrulencontainer im Querschnitt eine rechteckige Außenform hat.

10. Ferrulencontainer nach einem der vorhergehenden Ansprüche,
dadurch gekennzeichnet, daß
im Bereich der Ferrulenschächte und/oder der Außenseite des Ferrulencontainers eine Abschirmung gegen elektromagnetische Einflüsse vorgesehen ist.

11. Ferrulencontainer nach einem der vorhergehenden Ansprüche,
dadurch gekennzeichnet, daß
im Bereich einer Stirnseite des Ferrulencontainers wenigstens eine Führungsbohrung vorgesehen ist, in die ein Führungsstift einsetzbar ist.

12. Verbindungsanordnung zum Verbinden von optischen Fasern, die die folgenden Merkmale aufweist:
- wenigstens einen ersten Ferrulencontainer (6, 7) gemäß Anspruch 1 zur Aufnahme wenigstens einer in einer ersten Ferrule (13, 14) angeordneten ersten optischen Mehrfachfaser (11, 12),
- wenigstens ein insbesondere auf einer Platine (5) anbringbares Boardgehäuse (4) zur Aufnahme des ersten Ferrulencontainers (6, 7),
- wenigstens ein insbesondere an einer Backplane (3) anbringbares Durchführungsgehäuse (2) zur Aufnahme wenigstens einer in einer zweiten Ferrule (56) angeordneten zweiten optischen Mehrfachfaser (11'),
wobei das Boardgehäuse (4) und das Durchführungsgehäuse (2) derart zusammensteckbar ausgebildet sind, daß eine Stirnseite (15, 16) der ersten Ferrule (13, 14) an einer Stirnseite der zweiten Ferrule (56) anliegt, wobei der erste Ferrulencontainer (6, 7), das Boardgehäuse (4) sowie das Durchführungsgehäuse (2) weiterhin derart ausgebildet sind, daß in zusammengestecktem Zustand von Boardgehäuse (4) und Durchführungsgehäuse (2) eine Verbindung zwischen der ersten Ferrule (13, 14) und der zweiten Ferrule (56) besteht,
**wobei**
eine lösbare erste Verriegelungseinrichtung (36, 49) zur Verbindung von erstem Ferrulencontainer (6, 7) und Boardgehäuse (4) sowie eine lösbare zweite Verriegelungseinrichtung (32, 54) zur Verbindung von erstem Ferrulencontainer (6, 7) und Durchführungsgehäuse (2) vorgesehen ist,
**wobei ferner die erste Verriegelungseinrichtung so ausgebildet ist, daß**
sich in zusammengestecktem Zustand von Boardgehäuse (4) und Durchführungsgehäuse (2) die erste Verriegelungseinrichtung (36, 49) in gelöstem Zustand und
die zweite Verriegelungseinrichtung (32, 54) in gesperrtem Zustand befindet,
**und/oder**
sich in voneinander getrenntem Zustand von Boardgehäuse (4) und Durchführungsgehäuse (2) die erste Verriegelungseinrichtung (36, 49) in gesperrtem Zustande befindet.

13. Verbindungsanordnung nach **Anspruch 12,**
dadurch gekennzeichnet, daß
die erste Verriegelungseinrichtung (36, 49) so ausgebildet ist, daß sie durch eine Bewegung des Boardgehäuses (4) in Richtung weg vom Durchführungsgehäuse (2) von einem gelösten Zustand in einen gesperrten Zustand bringbar ist.

14. Verbindungsanordnung nach Anspruch **13**
dadurch gekennzeichnet, daß
die erste Verriegelungseinrichtung (36, 49) so ausgebildet ist, daß sie im Verlauf einer Bewegung des Boardgehäuses (4) in Richtung weg vom Durchführungsgehäuse (2) automatisch in einen gesperrten Zustand übergeht.

15. Verbindungsanordnung nach einem der Ansprüche **12** bis **14**,
dadurch gekennzeichnet, daß
die erste Verriegelungseinrichtung (36, 49) so ausgebildet ist, daß sie im Verlauf einer Bewegung des Boardgebäuses (4) in Richtung zum Durchführungsgehäuse (2) hin in einen gelösten Zustand bringbar ist.

16. Verbindungsanordnung nach Anspruch **15**,
dadurch gekennzeichnet, daß
die erste Verriegelungseinrichtung (36, 49) so ausgebildet ist, daß sie im Verlauf einer Bewegung des Boardgehäuses (4) in Richtung zum Durchführungsgehäuse (2) hin automatisch in einen gelösten Zustand übergeht.

17. Verbindungsanordnung nach einem der Ansprüche **12** bis **16**, dadurch gekennzeichnet, daß
die zweite Verriegelungseinrichtung (32, 54) so ausgebildet ist, daß sie durch eine Bewegung des Boardgehäuses (4) in Richtung zum Durchführungsgehäuse (2) hin in einen gesperrten Zustand bringbar ist.

18. Verbindungsanordnung nach Anspruch **17**,
dadurch gekennzeichnet, daß
die zweite Verriegelungseinrichtung (32, 54) so ausgebildet ist, daß sie bei einer Bewegung des Boardgehäuses (**4**) in Richtung zum Durchführungsgehäuse (2) hin automatisch in einen gesperrten Zustand übergeht.

19. Verbindungsanordnung nach einem der Ansprüche **12** bis **18**,
dadurch gekennzeichnet, daß
die zweite Verriegelungseinrichtung (32, 54) so ausgebildet ist, daß sie bei einer Bewegung des Boardgehäuses (4) in Richtung vom Durchführungsgehäuse (2) weg in einen gelösten Zustand bringbar ist.

20. Verbindungsanordnung nach Anspruch **19**,
dadurch gekennzeichnet, daß
sich die erste Verriegelungseinrichtung (36, 49) so ausgebildet ist, daß sie bei einer Bewegung des Boardgehäuses (4) vom Durchführungsgehäuse (2) weg automatisch in einen gelösten Zustand übergeht.

21. Verbindungsanordnung nach einem der Ansprüche **12** bis **20**
dadurch gekennzeichnet, daß
die erste Verriegelungseinrichtung im Bereich des Ferrulencontainers (6, 7) vorgesehene Schnapphaken (36) sowie im Bereich des Boardgehäuses (4) Boardgehäuse-Rastnasen (49) aufweist.

22. Verbindungsanordnung nach Anspruch **21**,
dadurch gekennzeichnet, daß
die erste Verriegelungseinrichtung im Bereich des Durchführungsgehäuses (2) vorgesehene erste Auswerfernasen (55) aufweist.

23. Verbindungsanordnung nach einem der Ansprüche **12** bis **22**,
dadurch gekennzeichnet, daß
die zweite Verriegelungseinrichtung im Bereich des Ferrulencontainers (6, 7) vorgesehene Schnapphaken (32) sowie im Bereich des Durchführungsgehäuses (2) vorgesehene Durchführungsgehäuse-Rastnasen (54) aufweist.

24. Verbindungsanordnung nach Anspruch **23**,
dadurch gekennzeichnet, daß
die zweite Verriegelungseinrichtung im Bereich des Boardgehäuses (4) vorgesehene zweite Auswerfernasen (50) aufweist.

## Claims

1. A ferrule container (6, 7) for receiving a plurality of multiple optical fibres (11, 12) each arranged in ferrules (13, 14),
in which mutually parallel ferrule shafts (20, 21; 40, 41) are provided for receiving the ferrules (13, 14),
in which the ferrule shafts (20, 21; 40, 41) have at least one respective and in particular actuable ferrule holding means (25, 26, 28, 30) for fixing the ferrules (13, 14),
and in which the ferrule holding means is divided into: a spring holder (26) which is capable of being received in a ferrule shaft (20, 21; 40, 41); a pressure spring (28); and spring holder latching lugs (30), provided in the ferrule shaft or on the spring holder (26), which engage in latching lug openings (25) provided in the ferrule shaft (20, 21; 40, 41) or on the spring holder, in which the spring holder may be constructed in a manner which is encodable in relation to direction in particular by the arrangement of latching lug openings (25) and spring holder latching lugs (30).

2. A ferrule container according to Claim 1, characterised in that the spring holder latching lugs (30) are constructed to be actuable.

3. A ferrule container according to one of the preceding claims, characterised in that on the outside locking elements (32, 36) are provided which are constructed such that the ferrule container (6, 7) is fixable in a board housing (4) or in a connection housing (2).

4. A ferrule container according to Claim 3, characterised in that the locking elements (32, 36) are constructed such that the ferrule container (6, 7) is fixable in detachable manner.

5. A ferrule container according to one of the preceding claims, characterised by the following features:
- a plurality of ferrule shafts (20, 21; 40, 41) is provided,
- the ferrule shafts (20, 21; 40, 41) have a substantially rectangular internal shape in cross-section.

6. A ferrule container according to Claim 5, characterised in that in each case two ferrule shafts (20, 21; 40, 41) are arranged such that in cross-section each has one of its longer internal edges lying directly next to a respective one of the other.

7. A ferrule container according to one of Claims 1 to 6, characterised in that the ferrule container has a substantially square external shape in cross-section.

8. A ferrule container according to Claim 7, characterised in that ferrule container encoding elements are provided on the outside of the ferrule container and are constructed such that they enable an orientation of pushing the ferrule container into a board housing or into a connection housing to be determined.

9. A ferrule container according to one of Claims 1 to 8, characterised in that the ferrule container has a rectangular external shape in cross-section.

10. A ferrule container according to one of the preceding claims, characterised in that in the region of the ferrule shafts and/or the outside of the ferrule container a screen to protect against electromagnetic influences is provided.

11. A ferrule container according to one of the preceding claims, characterised in that in the region of an end face of the ferrule container at least one guide bore into which a guide pin may be inserted is provided.

12. A connection arrangement for connecting optical fibres, which has the following features:
- at least a first ferrule container (6, 7) according to Claim 1 for receiving at least a first multiple optical fibre (11, 12) arranged in a first ferrule (13, 14),
- at least one board housing (4) which is in particular capable of being mounted on a circuit board (5), for receiving the first ferrule container (6, 7),
- at least one bushing housing (2) which is in particular capable of being mounted on a back plane (3), for receiving at least a second multiple optical fibre (11') arranged in a second ferrule (56),
in which the board housing (4) and the bushing housing (2) are constructed so that they may be pushed together in such a way that an end face (15, 16) of the first ferrule (13, 14) abuts against an end face of the second ferrule (56), with the first ferrule container (6, 7), the board housing (4) and the bushing housing (2) furthermore being constructed in such a way that in the pushed-together condition of the board housing (4) and the bushing housing (2) there is a connection between the first ferrule (13, 14) and the second ferrule (56),
in which a detachable first locking means (36, 49) for connecting the first ferrule container (6, 7) and the board housing (4) and a detachable second locking means (32, 54) for connecting the first ferrule container (6, 7) and the bushing housing (2) are provided,
in which furthermore the first locking means is constructed such that in the pushed-together condition of the board housing (4) and the bushing housing (2) the first locking means (36, 49) is in the detached condition and the second locking means (32, 54) is in the blocked condition,
and/or the first locking means (36, 49) is in the blocked condition when the board housing (4) and the bushing housing (2) are in the condition separated from one another.

13. A connection arrangement according to Claim 12, characterised in that the first locking means (36, 49) is constructed such that it may be brought from a detached condition into a blocked condition as a result of a movement of the board housing (4) in the direction away from the bushing housing (2).

14. A connection arrangement according to Claim 13, characterised in that the first locking means (36, 49) is constructed such that it automatically moves over to a blocked condition during the course of a movement of the board housing (4) in the direction away from the bushing housing (2).

15. A connection arrangement according to one of Claims 12 to 14, characterised in that the first locking means (36, 49) is constructed such that it may be brought into a detached condition during the course of a movement of the board housing (4) in the direction towards the bushing housing (2).

16. A connection arrangement according to Claim 15, characterised in that the first locking means (36, 49) is constructed such that it automatically moves over to a detached condition during the course of a movement of the board housing (4) in the direction towards the bushing housing (2).

17. A connection arrangement according to one of Claims 12 to 16, characterised in that the second locking means (32, 54) is constructed such that it may be brought into a blocked condition as a result of a movement of the board housing (4) in the direction towards the bushing housing (2).

18. A connection arrangement according to Claim 17, characterised in that the second locking means (32, 54) is constructed such that it automatically moves over to a blocked condition on a movement of the board housing (4) in the direction towards the bushing housing (2).

19. A connection arrangement according to one of Claims 12 to 18, characterised in that the second locking means (32, 54) is constructed such that it may be brought into a detached condition on a movement of the board housing (4) in the direction away from the bushing housing (2).

20. A connection arrangement according to Claim 19, characterised in that the first locking means (36, 49) is constructed such that it automatically moves over to a detached condition on a movement of the board housing (4) away from the bushing housing (2).

21. A connection arrangement according to one of Claims 12 to 20, characterised in that the first locking means has click-in hooks (36) provided in the region of the ferrule container (6, 7) and board housing latching lugs (49) in the region of the board housing (4).

22. A connection arrangement according to Claim 21, characterised in that the first locking means has first ejector lugs (55) provided in the region of the bushing housing (2).

23. A connection arrangement according to one of Claims 12 to 22, characterised in that the second locking means has click-in hooks (32) provided in the region of the ferrule container (6, 7) and bushing housing latching lugs (54) provided in the region of the bushing housing (2).

24. A connection arrangement according to Claim 23, characterised in that the second locking means has second ejector lugs (50) provided in the region of the board housing (4).

## Revendications

1. Conteneur de ferrules (6, 7) destiné à recevoir plusieurs fibres optiques multiples (11, 12) agencées respectivement dans des ferrules (13, 14),
des cavités à ferrules à extension parallèle (20, 21; 40, 41) étant destinées à recevoir les ferrules (13, 14),
les cavités à ferrules (20, 21; 40, 41) comportant au moins un dispositif de retenue des ferrules en particulier à actionnement (25, 26, 28, 30) pour fixer les ferrules (13, 14),
le dispositif de retenue des ferrules étant subdivisé en un support de ressort (26) pouvant être reçu dans une cavité à ferrules (20, 21; 40, 41), en un ressort de pression (28) ainsi qu'en des pattes d'arrêt du support de ressort (30) agencées dans une cavité à ferrules ou dans un support de ressort (26) et en des pattes d'arrêt du support de ressort (30) s'engageant dans des ouvertures des pattes d'arrêt (25) agencées dans la cavité à ferrules (20, 21; 40, 41) ou sur le support de ressort, le support de ressort pouvant comporter en particulier un codage d'orientation par l'intermédiaire de l'agencement des ouvertures des pattes d'arrêt (25) et des pattes d'arrêt du support de ressort (30).

2. Conteneur de ferrules selon la revendication 1, caractérisé en ce que les pattes d'arrêt du support de ressort (30) ont une configuration à actionnement.

3. Conteneur de ferrules selon l'une des revendications précédentes, caractérisé en ce que des éléments de verrouillage (32, 36) sont agencés à l'extérieur et configurés de sorte que le conteneur de ferrules (6, 7) peut être fixé dans un boîtier de plaquette (4) ou dans un boîtier de connexion (2).

4. Conteneur de ferrules selon la revendication 3, caractérisé en ce que les éléments de verrouillage (32, 36) sont configurés de sorte que le conteneur de ferrules (6, 7) peut être fixé de manière amovible.

5. Conteneur de ferrules selon l'une des revendications précédentes, caractérisé en ce que:
- il comporte plusieurs cavités à ferrules (20, 21; 40, 41),
- les cavités à ferrules (20, 21; 40, 41) ont une forme interne essentiellement rectangulaire en section transversale.

6. Conteneur à ferrules selon la revendication 5, caractérisé en ce que deux cavités à ferrules (20, 21; 40, 41) sont agencées de sorte à être directement juxtaposées, respectivement en section transversale d'un de leurs bords internes plus longs.

7. Conteneur de ferrules selon l'une des revendications 1 à 6, caractérisé en ce que le conteneur de ferrules a une forme externe essentiellement carrée en section transversale.

8. Conteneur de ferrules selon la revendication 7, caractérisé en ce que des éléments de codage du conteneur de ferrules sont agencés sur le côté externe du conteneur de ferrules et configurés de sorte à permettre la fixation d'une orientation d'insertion du conteneur de ferrules dans un boîtier de plaquette ou dans un boîtier de connexion.

9. Conteneur de ferrules selon l'une des revendications 1 à 8, caractérisé en ce que le conteneur de ferrules a une forme externe rectangulaire en section transversale.

10. Conteneur de ferrules selon l'une des revendications précédentes, caractérisé en ce qu'un blindage contre les influences électromagnétiques est agencé dans la région des cavités à ferrules et/ou du côté externe du conteneur de ferrules.

11. Conteneur de ferrules selon l'une des revendication précédentes, caractérisé en ce qu'au moins un alésage de guidage, dans lequel peut être insérée une broche de guidage est agencé dans la région d'un côté frontal du conteneur de ferrules.

12. Assemblage de connexion pour connecter des fibres optiques, caractérisé en ce qu'il comportes:
- au moins un premier conteneur de ferrules (6, 7) selon la revendication 1, destiné à recevoir au moins une fibre optique multiple (11, 12) agencée dans une première ferrule (13, 14),
- au moins un boîtier de plaquette (4), pouvant en particulier être agencée sur une platine (5) pour recevoir le premier conteneur de ferrules (6, 7),
- au moins un boîtier de passage, agencé en particulier sur un fond de panier (3), pour recevoir au moins une deuxième fibre optique multiple (11') agencée dans une deuxième ferrule (56),
le boîtier de plaquette (4) et le boîtier de passage (2) ayant une configuration à connexion telle qu'un côté frontal (15, 16) de la première ferrule (13, 14) est adjacent à un côté frontal de la deuxième ferrule (56), le premier conteneur de ferrules (6, 7), le boîtier de plaquette (4) et le boîtier de passage (2) étant en outre configurés de sorte que dans l'état connecté du boîtier de plaquette (4) et du boîtier de passage (2) il existe une connexion entre la première ferrule (13, 14) et la deuxième ferrule (56),
un premier dispositif de verrouillage à dégagement (36, 49) destiné à connecter le premier conteneur de ferrules (6, 7) et le boîtier de plaquette (4), et un deuxième dispositif de verrouillage à dégagement (32, 54) pour connecter le premier conteneur de ferrules (6, 7) et le boîtier de passage (2),
le premier dispositif de verrouillage étant configuré de sorte que dans l'état connecté du boîtier de plaquette (4) et du boîtier de passage (2) le premier dispositif de verrouillage (36, 49) se trouve dans l'état dégagé, le deuxième dispositif de verrouillage (32, 54) se trouvant dans l'état verrouillé,
et/ou le premier dispositif de verrouillage (36, 49) se trouve dans l'état verrouillé lorsque le boîtier de plaquette (4) et le boîtier de passage (2) sont séparés.

13. Assemblage de connexion selon la revendication 12, caractérisé en ce que le premier dispositif de verrouillage (36, 49) est configuré de sorte qu'un déplacement du boîtier de plaquette (4) dans une direction l'écartant du boîtier de passage (2) le place d'un état dégagé dans un état verrouillé.

14. Assemblage de connexion selon la revendication 13, caractérisé en ce que le premier dispositif de verrouillage (36, 49) est configuré de sorte qu'au cours d'un déplacement du boîtier de plaquette (4) dans une direction l'écartant du boîtier de passage (2) il est placé automatiquement dans un état verrouillé.

15. Assemblage de connexion selon l'une des revendications 12 à 14, caractérisé en ce que le premier dispositif de verrouillage (36, 49) est configuré de sorte qu'au cours d'un déplacement du boîtier de plaquette (4) en direction du boîtier de passage (2) il peut être mis dans un état dégagé.

16. Assemblage de connexion selon la revendication 15, caractérisé en ce que le premier dispositif de verrouillage (36, 49) est configuré de sorte qu'au cours d'un déplacement du boîtier de plaquette (4) en direction du boîtier de passage (2), il passe automatiquement dans un état dégagé.

17. Assemblage de connexion selon l'une des revendications 12 à 16, caractérisé en ce que le deuxième dispositif de verrouillage (32, 54) est configuré de sorte qu'au cours d'un déplacement du boîtier de plaquette (4) en direction du boîtier de passage (2) il peut être mis dans un état verrouillé.

18. Assemblage de connexion selon la revendication 17, caractérisé en ce que le deuxième dispositif de verrouillage (32, 54) est configuré de sorte qu'au cours d'un déplacement du boîtier de plaquette (4) en direction du boîtier de passage (2) il passe automatiquement dans un état verrouillé.

19. Assemblage de connexion selon l'une des revendications 12 à 18, caractérisé en ce que le deuxième dispositif de verrouillage (32, 54) est configuré de sorte que lors d'un déplacement du boîtier de plaquette (4) à l'écart du boîtier de passage (2) il peut être mis dans un état dégagé.

20. Assemblage de connexion selon la revendication 19, caractérisé en ce que le premier dispositif de verrouillage (36, 49) est configuré de sorte que lors d'un déplacement du boîtier de plaquette (4) à l'écart du boîtier de passage (2), il passe automatiquement dans un état dégagé.

21. Assemblage de connexion selon l'une des revendications 12 à 20, caractérisé en ce que le premier dispositif de verrouillage comporte des crochets d'enclenchement (36) agencés dans la région du conteneur de ferrules (6, 7) et des pattes d'arrêt du boîtier de plaquette (49) agencées dans la région du boîtier de plaquette (4).

22. Assemblage de connexion selon la revendication 21, caractérisé en ce que le premier dispositif de verrouillage comporte des premières pattes d'éjection (55) agencées dans la région du boîtier de passage (2).

23. Assemblage de connexion selon l'une des revendications 12 à 22, caractérisé en ce que le deuxième dispositif de verrouillage comporte des crochets d'enclenchement (32) agencés dans la région du conteneur de ferrules (6, 7) et des pattes d'arrêt du boîtier de passage (54) agencées dans la région du boîtier de passage (2).

24. Assemblage de connexion selon la revendication 23, caractérisé en ce que le deuxième dispositif de verrouillage comporte des deuxièmes pattes d'éjection (50) dans la région du boîtier de plaquette (4).
